(19) Europäisches Patentamt
European Patent Office
Office européen des brevets

(11) **EP 4 390 470 A1**

(12) **EUROPEAN PATENT APPLICATION**

(43) Date of publication:
**26.06.2024 Bulletin 2024/26**

(21) Application number: **22215525.1**

(22) Date of filing: **21.12.2022**

(51) International Patent Classification (IPC):
**G01W 1/06** (2006.01)  **G01D 21/02** (2006.01)

(52) Cooperative Patent Classification (CPC):
**G01W 1/06;** G01D 21/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VITO NV**
**2400 Mol (BE)**

(72) Inventors:
• **Takacs, Sacha**
  **B-2400 Mol (BE)**
• **De Ridder, Koen**
  **B-2400 Mol (BE)**

(74) Representative: **Beck, Michaël Andries T.**
**IPLodge**
**Technologielaan 9**
**3001 Heverlee (BE)**

(54) **PORTABLE APPARATUS AND METHOD FOR SENSING ENVIRONMENTAL PARAMETERS**

(57) The invention pertains to a portable apparatus (100) for sensing environmental parameters, the apparatus (100) comprising: a device (110) for sensing thermal radiation; an air temperature sensor (120); a humidity sensor (130); an incident light sensor (140); a processor (150), operatively connected to said device (110) for sensing thermal radiation, said air temperature sensor (120), said humidity sensor (130), and said incident light sensor (140); and a non-volatile memory (160), operatively connected to said processor (150). The processor (150) is configured to: obtain substantially synchronous measurement values from said device (110) for sensing thermal radiation, said air temperature sensor (120), said humidity sensor (130), and said incident light sensor (140); and store said substantially synchronous measurement values and/or a physical quantity computed from said substantially synchronous measurement values, in said non-volatile memory (160). The invention also pertains to a method (200) of assessing environmental parameters over an extended geographic area.

Figure 1

## Description

### Field of the invention

The present invention relates to the field of temperature sensing, in particular to devices and methods for sensing environmental parameters that can be used to determine heat stress and/or estimate a wet bulb globe temperature (WBGT).

### Background

A commonly used method of measuring the WBGT of a particular environment is by measuring the three individual temperatures, the wet bulb temperature (WT), the globe temperature (GT) and the dry bulb temperature (DT) and substituting these measurements into a formula to determine the WBGT value:

$$\mathtt{WBGT = 0.7\ WB + 0.2\ GT + 0.1\ DB}$$

Several known apparatus use separate measurements of these three temperatures to derive the WBGT value. The present WBGT value (or a category based on WBGT thresholds) may be displayed by the apparatus to allow monitoring of compliance with labor regulations or to alert users of an elevated heat stroke risk.

United States patent no. 3855863 discloses a method of, and apparatus for, determining the wet bulb globe temperature (WBGT) of the surroundings as defined by WBGT = 0.7 WB + 0.2 GT + 0.1 DB, where WB is the web bulb temperature, GT is the 15 cm black globe temperature and DB is the shaded dry bulb temperature, of said surroundings. The method and apparatus include the steps of, and means for: locating a wet bulb thermometer in said surroundings to provide a first signal representative of the wet bulb temperature (WB) of said surroundings, locating a globe thermometer having a globe of a predetermined diameter (preferably about 4.19 cm diameter) in said surroundings such that the measured globe temperature is approximately equal to 2/3 GT + 1/3 DB, as defined above, to provide a second signal representative of said measured globe thermometer temperature of the surroundings whereby, by applying a weighting factor of 0.3 to the second signal and a weighting factor of 0.7 to said first signal by means of a resistor network, a third or weighted summation signal is obtained; comparing said weighted summation signal with a reference signal by means of an operational amplifier to provide a fourth signal corresponding to the difference therebetween, and providing said fourth signal to an indicator meter whereby an indication is obtained corresponding to the web bulb globe temperature (WBGT) of said surroundings.

Chinese patent application publication no. CN112067661A discloses a high-temperature detection equipment and method. The measurement precision of the equipment can be improved by arranging a distilled water detection sensor. The environment where the equipment is located can meet the equipment detection requirement by arranging a distance sensor and a light sensor. The time weighted average WBGT index is calculated through the screened WBGT indexes, then the time weighted average WBGT index is compared with the preset WBGT index limit value.

Chinese utility model publication no. CN208254670U discloses a portable WBGT index device, including a dry bulb temperature sensor, a natural wet bulb temperature sensor, and a black ball temperature sensor.

Japanese patent application publication no. JP2010266318A discloses the numerical calculation of a wet-bulb temperature by adopting a relative humidity and an air temperature as variables by using a psychrometer formula, and performing function fitting by polynomial approximation using a least-squares method, to thereby generate an approximation prediction expression of the wet-bulb temperature. Then, the wet-bulb temperature is approximated and predicted by substituting measured values of the relative humidity and the air temperature for the approximation prediction expression, and further an approximation prediction expression of the WBGT is generated by performing quadratic approximation from a relation between a wet-bulb temperature prediction value and the air temperature, and the wet-bulb temperature prediction value and the measured value of the air temperature are substituted for the approximation prediction expression, to thereby approximate and predict the WBGT.

There is still a need for a reliable WBGT sensor/estimator that is portable, easy to operate at a plurality of locations for consecutive measurements, and that can be used in indoor and outdoor environments.

### Summary of the Invention

According to an aspect of the present invention, there is provided a portable apparatus for sensing environmental parameters, the apparatus comprising: a device for sensing thermal radiation; an air temperature sensor; a humidity sensor; an incident light sensor; a processor, operatively connected to said device for sensing thermal radiation, said air temperature sensor, said humidity sensor, and said incident light sensor; and a non-volatile memory, operatively connected to said processor; wherein said processor is configured to: obtain substantially synchronous measurement values from said device for sensing thermal radiation, said air temperature sensor, said humidity sensor, and said incident light sensor; and store said substantially synchronous measurement values and/or a physical quantity computed from said substantially synchronous measurement values, in said non-volatile memory.

It is an advantage of the apparatus according to the present invention that it provides a sensing system that is portable, easy to operate at a plurality of locations, and that can be used in indoor and outdoor environments, and that is capable of providing a set of environmental measurements from which an estimated value of the wet bulb globe temperature can be reliably derived.

In an embodiment, the apparatus according to the present invention further comprises a clock, and the processor is further configured to: associate a set of substantially synchronous measurement values with a time value obtained from said clock; and store said set or said computed physical quantity along with said time value in said non-volatile memory.

It is an advantage of this embodiment that individual measurements belonging to a series of consecutive measurements can be associated with the correct time of capture when processed in a batch afterwards.

In an embodiment, the apparatus according to the present invention further comprises a positioning device, and the processor is further configured to: associate a set of substantially synchronous measurement values with a position value obtained from said positioning device; and store said set or said computed physical quantity along with said position value in said non-volatile memory.

It is an advantage of this embodiment that individual measurements belonging to a series of consecutive measurements can be associated with the correct geographical location of capture when processed in a batch afterwards.

In an embodiment of the apparatus according to the present invention, the processor is further configured to: compare said measurement value obtained from said incident light sensor to a predetermined reference value; and flag said substantially synchronous measurement values as valid or invalid on the basis of said comparing.

It is an advantage of this embodiment that measurements obtained outdoors can automatically be annotated as having been taken in direct sunlight or not, which may affect the way these measurements are processed in a subsequent analysis.

In an embodiment of the apparatus according to the present invention, at least said air temperature sensor is disposed in or under a shielding structure.

It is an advantage of this embodiment that the temperature reading obtained from the air temperature sensor is not unduly affected by directly incident sunlight.

In an embodiment of the apparatus according to the present invention, the device for sensing thermal radiation comprises a thermometer arranged in a dome having a low-reflectivity outer surface.

The inventors have found that this is a low-cost but reliable arrangement for sensing thermal radiation values.

In an embodiment, the apparatus according to the present invention is a handheld apparatus.

A small form-factor of the housing allows the apparatus to be carried around and operated for a large number of consecutive measurements, without complicating the logistics.

In an embodiment of the apparatus according to the present invention, the non-volatile memory is removable.

It is an advantage of this embodiment that the measurement results obtained with the apparatus can be copied or processed in a location away from the apparatus. More in particular, the removable memories of a plurality of apparatus can be collected after a measurement campaign, allowing all the data to be copied to a central location and collectively processed.

In an embodiment of the apparatus according to the present invention, the computed physical quantity is an estimated wet bulb globe temperature.

In an embodiment, the apparatus according to the present invention further comprises a data transmitter operatively connected to said processor, wherein said processor is further configured to cause said data transmitter to transmit said substantially synchronous measurement values and/or said computed physical quantity to an external device.

It is an advantage of this embodiment that the measurement results obtained with the apparatus can be transmitted to an external device, which may be situated at a location away from the apparatus. This facilitates collective processing of large numbers of measurements obtained from one or more apparatus.

According to an aspect of the present invention, there is provided a method of assessing environmental parameters over an extended geographic area, the method comprising: selecting a plurality of measurement sites distributed over said extended geographic area; and at each of said selected measurement sites: positioning an apparatus as described above at said site; and using said apparatus to obtain substantially synchronous measurement values from said thermal radiation sensor, said air temperature sensor, said humidity sensor, and said incident light sensor; and store said substantially synchronous measurement values and/or a physical quantity computed from said substantially synchronous measurement values, in said non-volatile memory.

In an embodiment, the method according to the present invention further comprises at each of said selected measurement sites: using said apparatus to associate a set of substantially synchronous measurement values with a time value obtained from a clock and store said set or said computed physical quality along with said time value in said non-volatile memory.

In an embodiment, the method according to the present invention further comprises at each of said selected measurement sites:

using said apparatus to associate a set of substantially synchronous measurement values with a position value obtained from a positioning device and store said set or said computed physical quality along with said position value in said non-volatile memory.

In an embodiment, the method according to the present invention further comprises for each of said selected measurement sites: determining an estimated wet bulb globe temperature for said site on the basis of said thermal radiation value, said air temperature value, and said humidity value.

The technical effects and advantages of embodiments of the method according to the present invention correspond, *mutatis mutandis*, to those of the corresponding embodiments of the apparatus according to the present invention.

## Brief Description of the Figures

These and other features and advantages of embodiments of the preset invention will now be described in more detail with reference to the attached drawings, in which:

- Figure 1 schematically illustrates an embodiment of the apparatus according to the invention; and
- Figure 2 presents a flow chart of an embodiment of the method according to the invention.

## Detailed Description of Embodiments

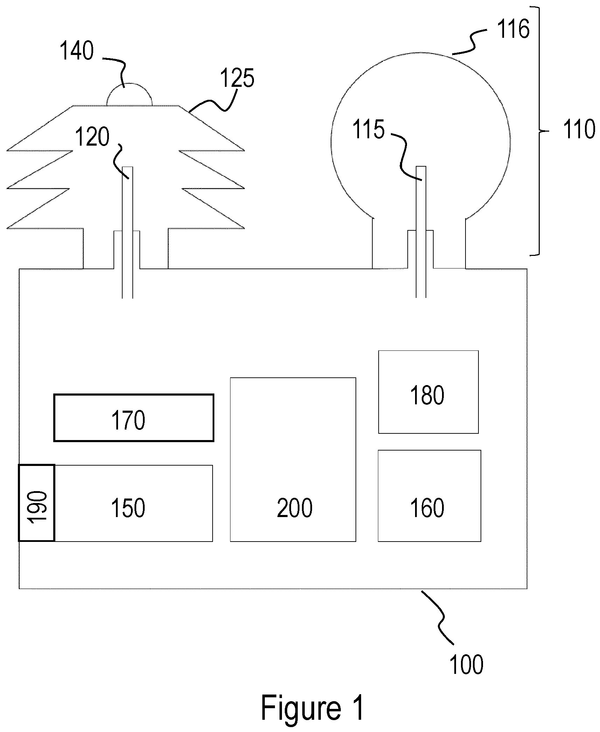

With reference to Figure 1, the invention may be embodied by a portable apparatus **100** for sensing environmental parameters. The apparatus is portable in the sense that it has a general size and weight that allow it to be easily carried around by an adult, at least when it is not in use. The size of the apparatus may be similar to that of a small briefcase.

The illustrated apparatus comprises: a device **110** for sensing thermal radiation; an air temperature sensor **120**; a humidity sensor **130**; an incident light sensor **140**; a processor **150**, operatively connected to the device **110** for sensing thermal radiation, the air temperature sensor **120**, the humidity sensor **130**, and the incident light sensor **140**; and a non-volatile memory **160**, operatively connected to the processor **150**. The housing of the apparatus **100**, which contains at least the processor **150**, the non-volatile memory **160**, and the internal parts of the sensors **110-140** is preferably waterproof, such that the apparatus can easily be transported or used even in adverse weather conditions.

The processor **150** is configured to: obtain substantially synchronous measurement values from the device **110** for sensing thermal radiation, the air temperature sensor **120**, the humidity sensor **130**, and the incident light sensor **140**; and store the substantially synchronous measurement values and/or a physical quantity computed from the substantially synchronous measurement values, in the non-volatile memory **160**.

The measurement values are obtained substantially synchronously in the sense that the sensors are read out at the same time or at times sufficiently close to each other to ensure that no significant changes in meteorological or atmospheric conditions take place between the individual readings.

The functions described herein as pertaining to the processor **150** may be implemented in dedicated hardware (e.g., ASIC), configurable hardware (e.g., FPGA), programmable components (e.g., a DSP or general-purpose processor with appropriate software), or any combination thereof. The same component(s) may also include other functions. The component(s) are typically provided on a printed circuit board, along with any auxiliary electronic components (not illustrated) that may be required to allow the processor **150** to function properly.

The apparatus **100** may further comprise a clock **170**, and the processor **150** may further be configured to: associate a set of substantially synchronous measurement values with a time value obtained from the clock **170**; and store the set or the computed physical quantity along with the time value in the non-volatile memory **160**. The time value preferably includes both the date and the time of day down to minute-level accuracy, and more preferably down to second-level accuracy.

The apparatus **100** may further comprise a positioning device **180**, and the processor **150** may further be configured to: associate a set of substantially synchronous measurement values with a position value obtained from the positioning device **180**; and store the set or the computed physical quantity along with the position value in the non-volatile memory **160**. The position value is preferably recorded at an accuracy of down to 50 m, more preferably at an accuracy of down to 10 m, and most preferably at an accuracy of down to 1.5 m. The positioning device **180** may comprise a receiver for a global navigation satellite system (such as GPS, Galileo, BDS, GLONASS, NavIC, QZSS, or any similar system) and logic to derive a position from the received GNSS signals.

The clock **170** may be integrated with processor **150**, with positioning device **180**, with any other suitable device, or it may be a separate component.

By storing the sensor measurement data alongside time and position data, different measurements from one or more apparatus **100** can be processed in batches, and patterns or maps can be generated on the basis of the measurement data.

The processor **150** may further be configured to: compare the measurement value obtained from the incident light sensor **140** to a predetermined reference value; and flag the substantially synchronous measurement values as valid or invalid on the basis of the comparing.

The light sensor **140** will detect the light intensity at a certain location, and will permit either discarding certain measured temperature data when captured in an area where illumination exceeds/is lower than a particular value, or correcting measured temperature data taking into account light intensity. This makes the apparatus **100** suitable for use in planted areas, where areas shadowed by plant leaves, may show irregular temperature measurements because of sun shining through the leave blanket. When reading out the measured data, a high temperature measurement correlated to a high light intensity measured in a shadowed environment, may for example be discarded.

In an embodiment of the apparatus **100** according to the present invention, the device **110** for sensing thermal radiation comprises a thermometer **115** arranged in a dome **116** having a low-reflectivity outer surface. This combination allows for a low-cost but reliable implementation of a thermal radiation sensor. The thermometer **115** may be a digital thermometer component, such as a DS18B20, commercially available from 3M of Saint Paul, MN, USA.

At least the air temperature sensor **120** is preferably disposed in or under a shielding structure **125**. The humidity sensor **130** may be placed in or under the same shielding structure **125**. The shielding structure **125** acts in the same way as a Stevenson screen, sheltering the covered instruments against precipitation and direct heat radiation from outside sources, while still allowing air to circulate freely around them. The shielding structure **125** preferably has a white color, to minimize absorption of incident radiation. The shielding structure **125** is preferably passively ventilated.

The air temperature sensor **120** and the humidity sensor **130** may be implemented in a single component. The DHT22 is an exemplary low-cost digital temperature and humidity sensor that may be used in embodiments of the present invention. It uses a capacitive humidity sensor and a thermistor to measure the surrounding air, and has a digital output.

The availability of both an air temperature measurement (from the air temperature sensor **120**) and a humidity measurement (from the humidity sensor **130**) allows for the calculation of a wet bulb temperature, without the use of a rather complex and costly wet bulb temperature sensor. This may be done by using an empirical expression. A suitable empirical expression is demonstrated in R. Stull, "Wet-bulb temperature from relative humidity and air temperature", Journal of applied meteorology and climatology, 50(11), 2011, pp. 2267-2269, and reproduced here for the convenience of the reader:

$$\text{Tw} = T * \text{atan}\left[\left(0.151977 * (RH + 8.313659)^{\frac{1}{2}}\right)\right] + \text{atan}(T + RH) - \text{atan}\,(RH$$

$$-1.676331) + 0.00391838 * (\text{RH})^{\frac{3}{2}} * \text{atan}(0.023101 * RH) - 4.686035$$

Here, Tw is the wet bulb temperature (°C), RH is the relative humidity (%) and T is the air temperature (°C).

If the conditions to use the above expression are not met, other known methods may be used, including the method disclosed in J.C. Liljegren et al., "Modeling the wet bulb globe temperature using standard meteorological measurements", Journal of occupational and environmental hygiene, 5(10), 2008, pp. 645-655.

In an embodiment, the apparatus **100** is a handheld apparatus. The components of the apparatus mentioned above can be chosen to be sufficiently small to allow their integration into a design that has a size comparable to a typical lunch box.

Preferably, the apparatus **100** is provided with its own power source, such as a replaceable and/or rechargeable battery or set of batteries **200**, allowing its consecutive use by the same user in a plurality of different locations, without requiring the apparatus to be plugged into and out of a power grid. The user can hold on to the apparatus **100** as they move from one location to the next, and activate the measurement operation as necessary.

The apparatus **100** may also comprise a socket to accept a DC power input (not illustrated), to power the apparatus when no batteries are present or when the batteries are depleted. The DC power input may also serve to charge the batteries **200** inside the apparatus **100**. If the apparatus **100** comprises a data transmitter **190** operating in accordance with certain standards for wired communication, the communications interface may also serve as a DC power input (e.g., USB or IEEE Std. 802.3af "Power over Ethernet"). The function of the data transmitter **190** is described in more detail below.

In an embodiment of the apparatus **100**, the non-volatile memory **160** is removable. The removable memory **160** may be implemented as a solid-state memory device, such as an SD-card or a USB stick; a magnetic storage device, such as a removable hard disk drive; an optical storage device, such as a (re)writable CD/DVD/BluRay disk; or any other suitable data storage technology.

The computed physical quantity may be an estimated wet bulb globe temperature. The wet bulb globe temperature (WBGT) of an environment, for example of a certain location in a city or on agricultural land, is an index used in practice to indicate heat stress on living organisms. The WBGT is a composite of four factors affecting thermal comfort: air temperature, relative humidity, air movement and thermal radiation level.

The WBGT may be calculated using the formula:

$$WBGT = 0.7 \; WB + 0.2 \; GT + 0.1 \; DB$$

Where DB is directly taken from the air temperature sensor, WB is calculated using the formula noted hereabove, and where, GT is calculated indirectly using the temperature sensor inside the hollow black globe.

In an embodiment, the apparatus **100** may further comprise a data transmitter **190** operatively connected to the processor **150**, wherein the processor **150** is further configured to cause the data transmitter **190** to transmit the substantially synchronous measurement values and/or the computed physical quantity to an external device.

The data transmitter **190** preferably operates according to an established data communications standard. The data transmitter **190** may operate according to a mobile data communication standard in order to make the apparatus **100** more suitable for field use; this includes standards such as GPRS, EDGE, HSDPA, 4G LTE, 5G, and the like. Additionally or alternatively, the data transmitter **190** may operate according to a wireless metropolitan area networking standard, such as UMTS or the IEEE 802.16 standards family. Additionally or alternatively, the data transmitter **190** may operate according to a local area networking standard, such as IEEE Std. 802.3 ("Ethernet") or IEEE Std. 802.11 ("WiFi"). Additionally or alternatively, the data transmitter **190** may operate according to a personal area networking standard, such as Bluetooth or USB.

The apparatus is provided with a user interface (not illustrated), which is preferably kept very simple. A push button may be connected to the batteries **200** and the processing unit **150**, such that when the button is pushed, the measurements start. One or more LEDs or a simple LCD display may be provided to signal the status of the apparatus **100** to the user, including warning signals if one or more sensors **110-140** is not functioning properly.

The apparatus may additionally be provided with an expert interface (not illustrated), for programming parameters in the processor **150** to control for instance the points of time at which measurements are carried out, the duration of the individual measurements and the measuring frequency. Once set by the expert, it should not be possible for these parameters to be manipulated by a non-expert user carrying out the measurements. The expert interface may take the form of additional physical controls (such as buttons and an LCD display), or it may involve connecting an external device to the apparatus **100** via a data communication interface (e.g., the interface used by the data transmitter **190**).

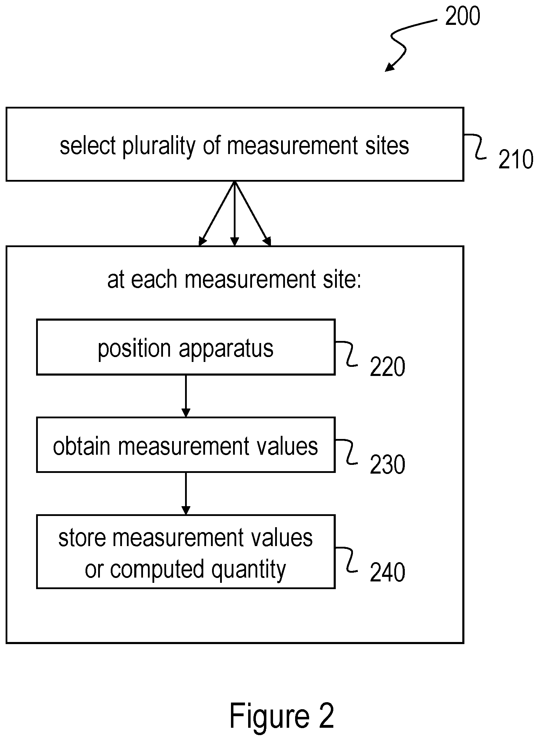

Figure 2 presents a flow chart of an embodiment of a method **200** of assessing environmental parameters over an extended geographic area, according to the present invention. The method **200** comprises selecting **210** a plurality of measurement sites distributed over the extended geographic area. An apparatus **100** as described above is positioned **220** at each of the selected measurement sites. Once it's in position, the apparatus **100** is used to obtain **220** substantially synchronous measurement values from the device **110** for sensing thermal radiation, the air temperature sensor **120**, the humidity sensor **130**, and the incident light sensor **140**; and to store **230** the substantially synchronous measurement values and/or a physical quantity computed from the substantially synchronous measurement values, in the non-volatile memory **160**.

Time and/or location data are preferably captured and stored along with the sensor data, as described above. This facilitates the subsequent processing of the data of a coordinated measurement campaign, e.g. to detect patterns or calculate statistics.

Embodiments of the method according to the invention may further comprise, for each of the selected measurement sites: determining an estimated wet bulb globe temperature for the site on the basis of the thermal radiation value, the air temperature value, and the humidity value.

While the invention has been described hereinabove with reference to specific embodiments, this was done to clarify and not to limit the invention, the scope of which is determined by the accompanying claims.

**Claims**

**1.** A portable apparatus (100) for sensing environmental parameters, the apparatus (100) comprising:

    - a device (110) for sensing thermal radiation;

- an air temperature sensor (120);
- a humidity sensor (130);
- an incident light sensor (140);
- a processor (150), operatively connected to said device (110) for sensing thermal radiation, said air temperature sensor (120), said humidity sensor (130), and said incident light sensor (140); and
- a non-volatile memory (160), operatively connected to said processor (150);

wherein said processor (150) is configured to:

- obtain substantially synchronous measurement values from said device (110) for sensing thermal radiation, said air temperature sensor (120), said humidity sensor (130), and said incident light sensor (140); and
- store said substantially synchronous measurement values and/or a physical quantity computed from said substantially synchronous measurement values, in said non-volatile memory (160) .

2. The apparatus (100) according to claim 1, further comprising a clock (170), wherein said processor (150) is further configured to:

- associate a set of substantially synchronous measurement values with a time value obtained from said clock (170); and
- store said set or said computed physical quantity along with said time value in said non-volatile memory (160).

3. The apparatus (100) according to claim 1 or claim 2, further comprising a positioning device (180), wherein said processor (150) is further configured to:

- associate a set of substantially synchronous measurement values with a position value obtained from said positioning device (180); and
- store said set or said computed physical quantity along with said position value in said non-volatile memory (160).

4. The apparatus (100) according to any of the preceding claims, wherein said processor (150) is further configured to:

- compare said measurement value obtained from said incident light sensor (140) to a predetermined reference value; and
- flag said substantially synchronous measurement values as valid or invalid on the basis of said comparing.

5. The apparatus (100) according to any of the preceding claims, wherein the device (110) for sensing thermal radiation comprises a thermometer (115) arranged in a dome (116) having a low-reflectivity outer surface.

6. The apparatus (100) according to any of the preceding claims, wherein at least said air temperature sensor (120) is disposed in or under a shielding structure (125).

7. The apparatus (100) according to any of the preceding claims, wherein the portable apparatus is a handheld apparatus.

8. The apparatus (100) according to any of the preceding claims, wherein the non-volatile memory (160) is removable.

9. The apparatus (100) according to any of the preceding claims, wherein said computed physical quantity is an estimated wet bulb globe temperature.

10. The apparatus (100) according to any of the preceding claims, further comprising a data transmitter (190) operatively connected to said processor (150), wherein said processor (150) is further configured to cause said data transmitter (190) to transmit said substantially synchronous measurement values and/or said computed physical quantity to an external device.

11. A method (200) of assessing environmental parameters over an extended geographic area, the method comprising:

- selecting (210) a plurality of measurement sites distributed over said extended geographic area; and
- at each of said selected measurement sites:

o positioning (220) an apparatus (100) according to any of claims 1-10 at said site; and
o using said apparatus (100) to

■ obtain (230) substantially synchronous measurement values from said device (110) for sensing thermal radiation, said air temperature sensor (120), said humidity sensor (130), and said incident light sensor (140); and
■ store (240) said substantially synchronous measurement values and/or a physical quantity computed from said substantially synchronous measurement values, in said non-volatile memory (160) .

12. The method according to claim 11, further comprising at each of said selected measurement sites: using said apparatus (100) to associate a set of substantially synchronous measurement values with a time value obtained from a clock (170) and store said set or said computed physical quality along with said time value in said non-volatile memory (160).

13. The method according to claim 11 or claim 12, further comprising at each of said selected measurement sites: using said apparatus (100) to associate a set of substantially synchronous measurement values with a position value obtained from a positioning device (180) and store said set or said computed physical quality along with said position value in said non-volatile memory (160).

14. The method according to any of claims 11-13, further comprising, for each of said selected measurement sites: determining an estimated wet bulb globe temperature for said site on the basis of said thermal radiation value, said air temperature value, and said humidity value.

Figure 1

Figure 2

Europäisches
Patentamt

European
Patent Office

Office européen
des brevets

# EUROPEAN SEARCH REPORT

Application Number

EP 22 21 5525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 115810 A (VAISALA OYJ) 9 August 2022 (2022-08-09) * abstract * * paragraphs [0001], [0005], [0016], [0017], [0020] * ----- | 1,11 | INV. G01W1/06 G01D21/02 |
| X | US 8 325 030 B2 (TOWNSEND CHRISTOPHER P [US]; ARMS STEVEN W [US] ET AL.) 4 December 2012 (2012-12-04) * abstract * * column 1, line 55 – column 2, line 4 * * column 2, lines 29-67 * * column 4, lines 22-33 * * column 7, line 45 – column 8, line 4 * * figure 3a * ----- | 1-14 | |

TECHNICAL FIELDS SEARCHED (IPC)

G01W
G01D

The present search report has been drawn up for all claims

| Place of search | Date of completion of the search | Examiner |
|---|---|---|
| The Hague | 2 June 2023 | Bagnera, Carlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 5525

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | | Publication date |
|---|---|---|---|---|---|
| JP 2022115810 A | | 09-08-2022 | CN | 114814989 A | 29-07-2022 |
| | | | EP | 4036614 A1 | 03-08-2022 |
| | | | JP | 2022115810 A | 09-08-2022 |
| | | | KR | 20220109342 A | 04-08-2022 |
| | | | US | 2022236450 A1 | 28-07-2022 |
| US 8325030 B2 | | 04-12-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3855863 A
- CN 112067661 A
- CN 208254670 U
- JP 2010266318 A

**Non-patent literature cited in the description**

- **R. STULL.** Wet-bulb temperature from relative humidity and air temperature. *Journal of applied meteorology and climatology,* 2011, vol. 50 (11), 2267-2269
- **J.C. LILJEGREN et al.** Modeling the wet bulb globe temperature using standard meteorological measurements. *Journal of occupational and environmental hygiene,* 2008, vol. 5 (10), 645-655